# EUROPEAN PATENT APPLICATION

(11) **EP 1 860 372 A1**
(43) Date of publication of application: **28.11.2007**
(21) Application number: 05811614.6
(22) Date of filing: 02.12.2005
(51) Int. Cl.: F21V 8/00, G02B 6/00, G02F 1/13357, F21Y 101/02

(54) **PLANAR ILLUMINATION DEVICE**

(30) Priority: 18.02.2005 JP 2005041601
(71) Applicant: Minebea Co. Ltd., Kitasaku-gun, Nagano 389-0293 (JP)
(72) Inventor: MIZUTANI, Hitoshi, a-machi, Kitasaku-gun, Nagano 3890293; (JP)
(74) Representative: Schaad, Balass, Menzl & Partner AG
(86) International application number: PCT/JP2005/022183
(87) International publication number: WO 2006/087863

(57) **Abstract**

A planar illumination device using LEDs is further increased and uniformized in brightness and thinned. A planar illumination device (10) has a light guide plate (2), LEDs (21-23) arranged on a side end face (3) of the light guide plate (2), and an FPC (11) on which the LEDs (21-23) are mounted. The LEDs (21-23) have exposed light emission sections (21a-23a) made from a translucent resin that seals the LED chips. The LEDs (21-23) are mounted on the FPC (11) with the light emission sections (21a-23a) projected from the outline of the FPC (11) and are arranged such that the light emission sections (21a-23a) are not projected from the side end face (3) of the light guide plate (2). Further, the planar illumination device has a reflection means (25) covering the light emission sections (21a-23a).

## Description

### Technical Field

The present invention relates to a side-light-type planar illumination device and particularly to a planar illumination device used as illuminating means of a liquid crystal display device.

### Background Art

A liquid crystal display device is widely used in display means or the like of electronic equipment at present but since the liquid crystal display device is not self-luminous, illuminating means for ensuring visibility at night and in dark places is needed. A planar illumination device has been used as such illuminating means.

As a mode of the planar illumination device, a side-light-type planar illumination device is widely used. The side-light-type planar illumination device comprises a light guide plate with light transmittance, a rod-state light source arranged on a side end face of the light guide plate or one or more point-like light source as basic elements. As a recent trend, in accordance with an increase in applications of planar illumination devices to small-sized electronic equipment such as personal digital assistant, a planar illumination device of the type provided with a point-like light source capable of simplification of a driving circuit is used, and a white LED (hereinafter also referred to simply as an LED) is frequently used as a point-like light source.

This type of LED is usually mounted on a circuit board such as a flexible print circuit (hereinafter also referred to as FPC) and arranged on the side end face of the light guide plate, and in this configuration, one of major faces of the FPC and the light guide plate are fixed together in the prior art (See Patent Document 1, for example).

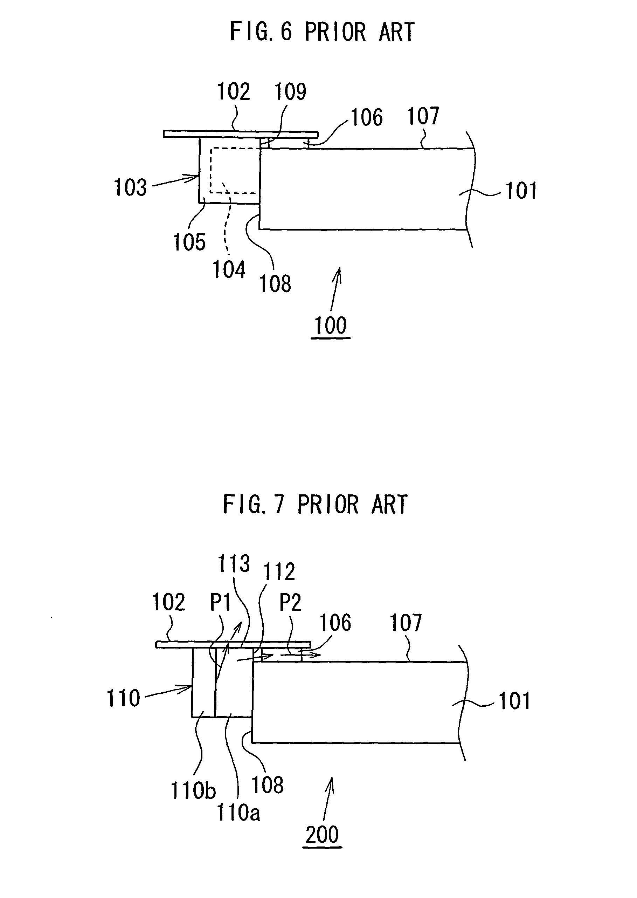

Fig. 6 is a side view schematically illustrating a planar illumination device having the above configuration. A planar illumination device 100 shown in Fig. 6 comprises a light guide plate 101, an LED 103, and an FPC 102 on which the LED 103 is mounted, and the LED 103 is arranged on a side end face 108 by fixing a front portion of the FPC 102 to a major face 107 of the light guide plate 101 by fixing means 106 such as a double-sided adhesive tape. By fixing the FPC 102 and the light guide plate 101 in this way, the arrangement position of the LED 103 is held stably, and the connection efficiency between the LED 103 and the light guide plate 101 can be maintained favorably, which is advantageous. Here, the LED 103 usually has a translucent resin that seals an LED chip, not shown, and a sheath 105 made of a white resin or the like is provided on the periphery of the translucent resin 104. Typically, in the vicinity of the center part of a face 109 opposed to the side end face 108 of the light guide plate 101 of the LED 103, a through hole or a slit is provided in the sheath 105 so that the face 109 is to be used as a major light-emitting face.

Patent Document 1: Japanese Unexamined Patent Application Publication No. 2004-213943 (Claim 3, Fig. 2)

### Disclosure of Invention

### Problems to be Solved by the Invention

Since a planar illumination device using an LED plays a role as illuminating means for a liquid crystal display device, further thinning is in demand all the time while promoting higher and more uniform brightness. Thus, from a viewpoint of increase in light taking-out efficiency from an LED chip and no need of the thickness for a sheath, an LED formed with an exposed translucent resin that seals the LED chip is preferably used. However, the above configuration using such an LED has the following problem.

Fig. 7 is a side view of a conventional planar illumination device illustrating the same configuration as in Fig. 6 when the LED formed with the exposed translucent resin that seals the LED chip is used. In a planar illumination device 200 shown in Fig. 7, an LED 110 is formed of a board portion 110b on which an LED chip, not shown, is mounted and a light-emitting portion 110a made of a translucent resin that seals the LED chip, and the light-emitting portion 110a has no sheath on the periphery but is exposed. Since this LED 110 functions as a light-emitting face over the entire surface of the light-emitting portion 110a, there is a problem of lost light as a light path P1 and a light path P2 shown in Fig. 7, not utilized as illumination light, since the light is absorbed by or passed through the FPC 102 and the double-sided adhesive tape 106. In order to solve the problem, even if some reflecting means are laminated and arranged on the FPC 102, for example, its effect is not sufficient.

The present invention was made in view of the above problem and has an object to accelerate thinning of a planar illumination device using an LED while promoting higher and more uniform brightness.

### Means for Solving the Problems

In order to solve the above problem, a planar illumination device according to the present invention provided with a plate-state light guide plate, an LED arranged on a side end face of the light guide plate, and a circuit board, on which the LED is mounted, in which the LED is made of a translucent resin that seals an LED chip and has a light-emitting portion not having a sheath but being exposed, mounted on the circuit board with the light-emitting portion projecting from an outline of the circuit board and arranged so that the light-emitting portion is not projected from the side end face of the light guide plate in a direction crossing the light guide plate, and reflecting means covering the light-emitting portion is provided.

According to the present invention, since the translucent resin that seals the LED chip is exposed, an increase for the thickness of the sheath is not generated, but thinning of the planar illumination device is promoted. Moreover, by mounting the LED with the light-emitting portion projecting from the outline of the circuit board and arranging the light-emitting portion not projecting from the side end face of the light guide plate in a direction crossing the light guide plate, while reflecting means covering the light-emitting portion of the LED is provided, generation of lost light is minimized, and high light taking-out efficiency of the LED with the exposed translucent resin is fully utilized, which contributes to higher brightness of the planar illumination device.

In one mode of the present invention, the light guide plate has a notch portion accommodating the light-emitting portion of the LED on the side of the side end face on which the LED of the light guide plate is arranged. By this arrangement, the entire side face of the light-emitting portion of the LED is brought into close contact with the light guide plate, and light emission distribution of the light incident from the LED to the light guide plate can be made equal to the light emission distribution of the light by a single LED, which contributes to more uniform brightness of the planar illumination device.

Also, in one mode of the present invention, the light guide plate has a stepped part provided with a step on one of major faces of the light guide plate on the side end face on which the LED of the light guide plate is arranged, the stepped portion accommodates fixing means having an adhesive layer on both faces, and the circuit board is fixed to the light guide plate through the fixing means.

The circuit board is preferably formed in a comb form with a base portion and a plurality of arm portions extending from the base portion, the LED is mounted on the circuit board so that the light-emitting portion is arranged between the pair of arm portions, and the stepped portion in which the fixing means is accommodated of the light guide plate may be provided at a position corresponding to each of the plurality of arm portions.

By making the circuit board in the above predetermined shape, generation of lost light can be minimized, the high light taking-out efficiency of the LED with the exposed translucent resin can be fully utilized, and by fixing the circuit board to the light guide plate, the LED is stably held on the side end face of the light guide plate, and high connection efficiency between the LED and the light guide plate can be achieved.

Alternatively, the stepped portion accommodating the fixing means in the light guide plate may be provided as a projected portion extending from the side end face on which the LED of the light guide plate is arranged, by which the circuit board can be fixed to the light guide plate while the entire light guide plate is supported by the projected portion. This configuration is advantageous in improvement of robustness around a light source of the planar illumination device since the FPC can be fixed to the light guide plate without room for deformation such as bending when a flexible print circuit (FPC) having flexibility is used as the circuit board.

Moreover, in one mode of the present invention, the reflecting means may have an adhesive layer at least on one face side, and the back face of the circuit board and one of major faces of the light guide plate may be fixed by the reflecting means. Similarly, when the reflecting means has an adhesive layer at least on its one face side, the light-emitting portion of the LED and one of the major faces of the light guide plate may be fixed by the reflecting means.

By fixing the circuit board or the light-emitting portion of the LED mounted on the circuit board and one of the major faces of the light guide plate by the reflecting means having an adhesive layer, the planar illumination device according to the present invention can be put into practice with a relatively simple configuration and at a low cost.

### Advantages of the Invention

Since the present invention was configured as above, the high light taking-out efficiency of the LED formed so that the translucent resin that seals the LED chip is exposed can be fully utilized, and reduction in thickness of the planar illumination device can be accelerated while promoting higher and more uniform brightness.

### Brief Description of the Drawings

Figs. 1 are diagrams illustrating an essential part of a planar illumination device in a first embodiment of the present invention, in which Fig. 1(a) is an exploded plan view, Fig. 1(b) is an A-A sectional view showing an assembled state of the device in Fig. 1(a), and Fig. 1(c) is a B-B sectional view showing the assembled state of the device in Fig. 1(a).
Figs. 2 are diagrams illustrating an essential part of a planar illumination device in a second embodiment of the present invention, in which Fig. 2(a) is an exploded plan view and Fig. 2(b) is an A-A sectional view in an assembled state of the device in Fig. 2(a).
Fig. 3 is a sectional view illustrating another example of reflecting means in a planar illumination device in a third embodiment of the present invention.
Figs. 4 are diagrams illustrating an essential part of a planar illumination device in a third embodiment of the present invention, in which Fig. 4(a) is an exploded plan view and Fig. 4(b) is a side view in an assembled state of Fig. 4(a).
Figs. 5 are diagrams illustrating an essential part of a planar illumination device in a fourth embodiment of the present invention, in which Fig. 5(a) is an exploded plan view and Fig. 5(b) is a side view in an assembled state of Fig. 5(a).
Fig. 6 is a side view schematically illustrating configuration of a conventional planar illumination device.
Fig. 7 is a side view schematically illustrating configuration of a conventional planar illumination device when an LED with an exposed translucent resin that seals an LED chip is used.

### Reference Numerals

- 10, 30, 50, 70:: Planar illumination device
- 2, 32, 52, 72:: Light guide plate
- 3, 33, 53, 73:: Side end face opposing LED
- 11, 31:: Flexible print circuit (circuit board)
- 21, 22, 23:: LED
- 21a, 22a, 23a:: Light emitting portion
- 35, 36, 37, 75, 76, 77:: Notch portion
- 25, 38:: Reflecting means

### Best Mode for Carrying Out the Invention

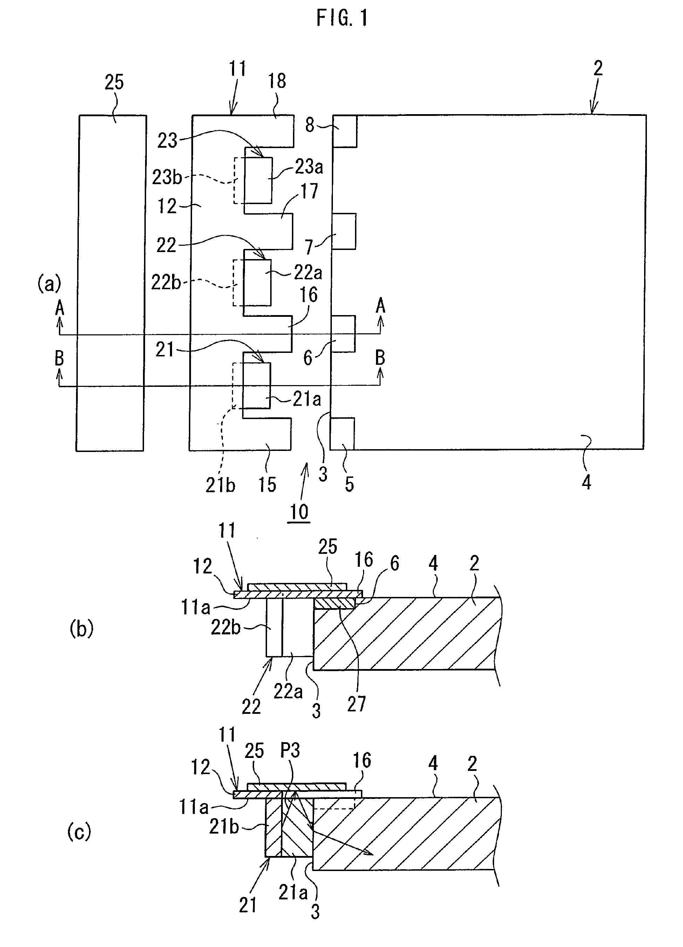

Embodiments of the present invention will be described below on the basis of the attached drawings. Figs. 1 to 5 are diagrams for explanation and do not necessarily reflect actual dimensions or ratios accurately.

Figs. 1 are diagrams illustrating an essential part of a planar illumination device in a first embodiment of the present invention, in which Fig. 1(a) is an exploded plan view, Fig. 1(b) is an A-A sectional view showing an assembled state of the device in Fig. 1(a), and Fig. 1(c) is a B-B sectional view showing the assembled state of the device in Fig. 1(a). A planar illumination device 10 shown in Fig. 1 comprises a plate-state light guide plate 2, three LEDs 21 to 23 arranged on a side end face 3 of the light guide plate 2, a flexible print circuit (FPC) 11, which is a circuit board in this embodiment and on which the LEDs 21 to 23 are mounted, and a reflector 25, which is reflecting means in this embodiment.

In this embodiment, the LEDs 21 to 23 are formed of board portions 21b to 23b on which LED chips (not shown) are mounted and light-emitting portions 21a to 23a made of a translucent resin that seals the LED chips and not having a sheath (and internal components such as a lamp house) but exposed.

The FPC 11 is formed in a comb form with a base portion 12 and four arm portions 15 to 18 extending to the front (in the direction of the light guide plate 2) from the base portion 12. In each of the LEDs 21 to 23, only their board portions 21b to 23b are mounted on the FPC 11 with the light-emitting portions 21a to 23a mounted on the FPC 11 and projecting from the outline of the FPC 11. Also, the LEDs 21 to 23 are arranged with the respective light-emitting portions 21a, 22a, 23a located between a pair of arm portions 15-16, 16-17, 17-18 so that the light-emitting portions 21a to 23a are not covered by the FPC 11.

Moreover, the light guide plate 2 has recess portions 5 to 8, which are stepped portions in this embodiment, on the side of the side end face 3 on which the LEDs 21 to 23 are arranged on a major face 4, and in each of the recess portions 5 to 8 provided at positions corresponding to each of the arm portions 15 to 18, fixing means (See reference numeral 27 in Fig. 1(b)) such as a double-sided adhesive tape is accommodated.

As shown with the arm portion 16 as an example in the A-A sectional view in Fig. 1(b), the distal end portions of the arm portions 15 to 18 of the FPC 11 are affixed by the fixing means 27 accommodated in the recess portions 5 to 8 and the FPC 11 is fixed to the light guide plate 2 so that a mounting surface 11a becomes substantially flush with the major face 4 of the light guide plate 4, and the reflector 25 is laminated and arranged on the FPC 11.

By the above configuration, the LEDs 21 to 23 in this embodiment have their light-emitting portions 21a to 23a arranged on the side end face 3 without projecting from the side end face 3 of the light guide plate 2 in a direction crossing the light guide plate 2 (vertical direction in the sectional view in Figs. 1(b) and 1(c)). By this configuration, the lost light caused by a light path such as the light path P2 shown in Fig. 7 is not generated but the LEDs 21 to 23 can be stably held on the side end face 3 of the light guide plate 2.

Also, as shown by the LED 21 as an example in the B-B sectional view in Fig. 1(c), since the FPC 11 is not interposed between the light-emitting portions 21a to 23a of the LEDs 21 to 23 and the reflector 25, light emitted in the direction of the major face 4 from the LEDs 21a to 23a can be directly reflected by the reflector 25 as a light path P3 and can be made incident to the side end face of the light guide plate 2 efficiently.

The reflector 25 in this embodiment is preferably a regular reflecting means, and specifically, a film on which metal such as silver is deposited, a metal plate such as an aluminum plate subjected to mirror machining or a film provided with a reflection layer in a multi-layered structure of a polymer thin film can be used. Also, diffusion reflecting means such as a white film obtained by making a resin base white by foaming or diffusion of a white pigment may be used. Also, in this embodiment, the light-emitting portions 21a to 23a of the LEDs 21 to 23 are covered by the integrally formed reflector 25, but the reflecting means according to the present invention may be formed of a plurality of reflecting means individually covering the light-emitting portions 21a, 22a, 23a of the LED 21, 22, 23, respectively.

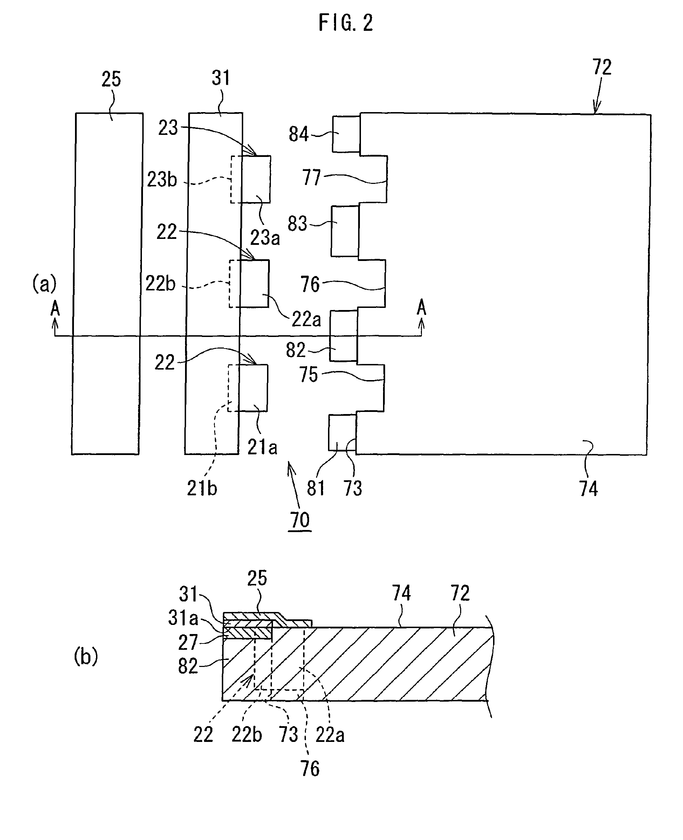

Next, referring to Figs. 2 to 5, other embodiments of the present invention will be described, but common components are given the same reference numerals in each embodiment including the above first embodiment so that explanation of duplicated portions is omitted as appropriate but features of each embodiment will be described in detail.

Figs. 2 are diagrams illustrating an essential part of a planar illumination device of a second embodiment of the present invention, in which Fig. 2(a) is an exploded plan view and Fig. 2(b) is an A-A sectional view showing an assembled state of the device in Fig. 2(a). A planar illumination device 70 shown in Fig. 2 is provided with a plate-state light guide plate 72, three LEDs 21 to 23 arranged on a side end face 73 of the light guide plate 72, an FPC 31 on which the LEDs 21 to 23 are mounted, and the reflector 25.

In the planar illumination device 70 in this embodiment, the FPC 31 is formed substantially in a rectangular shape, and the LEDs 21 to 23 have only their board portions 21b to 23b mounted on the FPC 31 with the light-emitting portions 21a to 23a mounted on the FPC 31 and projecting from the outline of the FPC 31 as in the above-mentioned first embodiment. Also, in the light guide plate 72, notch portions 75 to 77 for accommodating the light-emitting portions 21a to 23a, respectively, are formed on the side end face 73 on which the LEDs 21 to 23 are arranged, and projected portions 81 to 84 extending from a portion where there is no notch portions 75 to 77 on the side end face 73 are provided integrally with the light guide plate 72.

Here, as shown in Fig. 2(b) with the projected portion 82 as an example, the projected portions 81 to 84 are formed having a step with respect to a major face 74 so as to constitute a stepped portion in this embodiment. Moreover, on each of the projected portions 81 to 84, the fixing means 27 such as a double-sided adhesive tape is accommodated. In this embodiment, the FPC 31 is fixed to the projected portions 81 to 84 so that portions corresponding to each of the projected portions 81 to 84 are affixed to the fixing means 27 during assembly, respectively, and a mounting surface 31a becomes substantially flush with the major face 74 of the light guide plate 72, and the reflector 25 is laminated and arranged on the FPC 31. At this time, as shown in Fig. 2(b) with the LED 22 as an example, the light-emitting portions 21a to 23a of the LEDs 21 to 23 are accommodated in the corresponding notch portions 75 to 77, respectively, and arranged on the side end face 73.

By the above configuration, the LEDs 21 to 23 in this embodiment have their light-emitting portions 21a to 23a arranged on the side end face 73 without projecting from the side end face 73 of the light guide plate 72 in the direction crossing the light guide plate 72 (vertical direction in the sectional view in Fig. 2(b)), and the reflector 25 directly covers the light-emitting portions 21a to 23a of the LEDs 21 to 23 without the FPC 31 interposed therebetween. By this configuration, the planar illumination device 70 in this embodiment obtains actions and effects equivalent to those of the planar illumination device 10 in the above-mentioned first embodiment.

In addition, in the planar illumination device 70 in this embodiment, by accommodating the light-emitting portions 21a to 23a of the LEDs 21 to 23 in the notch portions 75 to 77, the entire side faces of the light-emitting portions 21a to 23a are brought into close contact with the light guide plate 72, and light emission distribution of the light incident to the light guide plate 72 from the LEDs 21 to 23 can be made equivalent to the light emission distribution of the light by the single LED.

Though the light-emitting portions 21a to 23a of the LEDs 21 to 23 are all accommodated in the notch portions 75 to 77 of the light guide plate 72 in this embodiment, only a part of the light-emitting portions 21a to 23a may be contained in the notch portions 75 to 77.

Moreover, in this embodiment, since the FPC 31 is fixed to the light guide plate 72 in a way that the entire FPC 31 is supported by the projected portions 81 to 84, the FPC 31 can be fixed to the light guide plate 72 without room for deformation such as bending, which is advantageous in improvement of robustness around a light source of the planar illumination device 70 as compared with the fixing method in the planar illumination device 10 shown in Fig. 1 in which the FPC 11 is fixed to the light guide plate 2 using the arm portions 15 to 18 extending in front of the FPC 11.

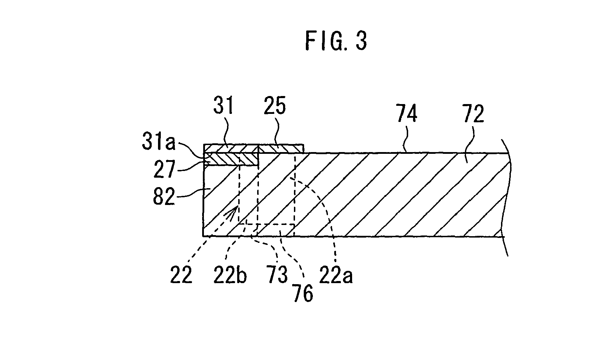

According to the present invention, it is only necessary for the reflector 25 to cover at least the light-emitting portions 21a to 23a of the LEDs 21 to 23, and the reflector 25 may be arranged in abutment with the FPC 31 from the side of the light guide plate 72 as shown in Fig. 3, for example. Such arrangement of the reflector 25 can be similarly put into practice in the case of the planar illumination device 10 shown in Fig. 1 by forming the reflector 25 in a comb form having arm portions provided in a complementary manner with the arm portions 15 to 18 of the FPC 11 or by forming a plurality of reflectors individually covering each of the light-emitting portions 21a to 23a and arranging the arm portions or the individual reflectors between the pair of arm portions 15-16, 16-17 and 17-18, respectively.

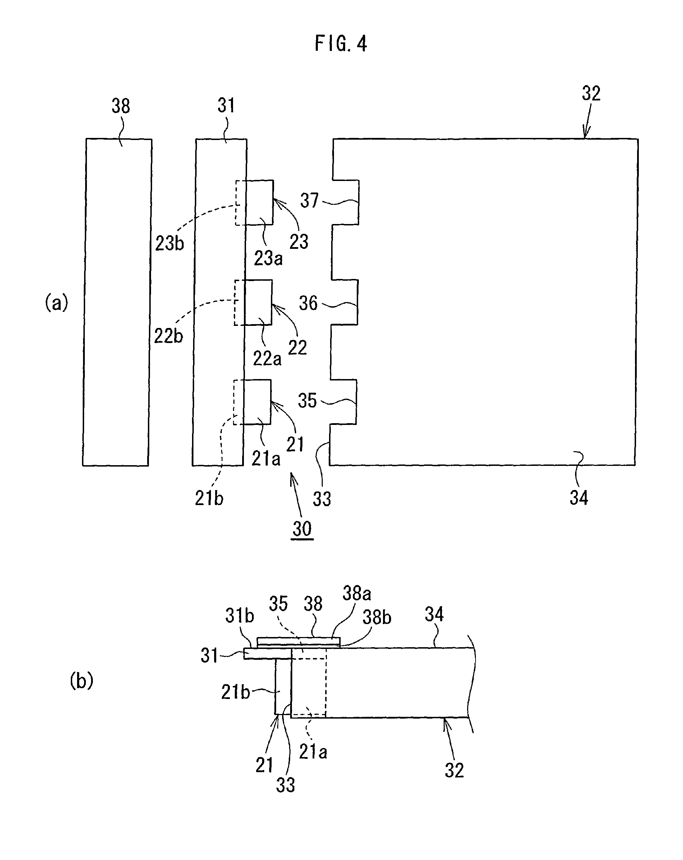

Figs. 4 are diagrams illustrating an essential part of a planar illumination device in a third embodiment of the present invention, in which Fig. 4(a) is an exploded plan view and Fig. 4(b) is a side view showing an assembled state of the device in Fig. 4(a). A planar illumination device 30 shown in Fig. 4 is formed of a plate-state light guide plate 32, three LEDs 21 to 23 arranged on a side end face 33 of the light guide plate 32, the FPC 31 on which the LEDs 21 to 23 are mounted, and a reflector 38, which is the reflecting means in this embodiment.

In the planar illumination device 30 in this embodiment, the FPC 31 is formed substantially in the rectangular shape, the LEDs 21 to 23 have only their board portions 21b to 23b mounted on the FPC 31 as in the above-mentioned first embodiment and the light-emitting portions 21a to 23a mounted on the FPC 31 and projecting from the outline of the FPC 31. Also, in the light guide plate 32, notch portions 35 to 37 for accommodating each of the light-emitting portions 21a to 23a are formed on the side end face 33 on which the LEDs 21 to 23 are arranged.

As shown in Fig. 4(b), in the planar illumination device 30 in this embodiment, the reflector 38 has an adhesive layer 38b at least on its one face side in addition to a reflection layer 38a similar to the reflector 25 in the above-mentioned first and second embodiments, and the FPC 31 is arranged with a back face 31b on the side opposite to the mounting face substantially flush with a major face 34 of the light guide plate 32 and fixed to the major face 34 of the light guide plate 32 by the reflector 38 also functioning as the fixing means. At this time, as shown in Fig. 4(b) with the LED 21 as an example, the light-emitting portions 21a to 23a of the LEDs 21 to 23 are accommodated in the corresponding notch portions 35 to 37, respectively, and arranged on the side end face 33.

The reflector 38 may have an adhesive layer 38b on one entire face side thereof but preferably does not have the adhesive layer 38b in areas facing the light-emitting portions 21a to 23a of the LEDs 21 to 23 so that the reflection layer 38a is directly opposed to the light-emitting portions 21a to 23a in those areas.

By the above configuration, the planar illumination device 30 in this embodiment can obtain actions and effects equivalent to those of the planar illumination device 10 in the above-mentioned first embodiment, but in the planar illumination device 30, by accommodating the light-emitting portions 21a to 23a of the LEDs 21 to 23 in the notch portions 35 to 37, the entire side faces of the light-emitting portions 21a to 23a are brought into close contact with the light guide plate 32, and light emission distribution of the light incident to the light guide plate 32 from the LEDs 21 to 23 can be made equivalent to the light emission distribution of the light by a single LED and at the same time, the planar illumination device having such action and effect can be realized by relatively simple configuration and at a lower cost.

Though the light-emitting portions 21a to 23a of the LEDs 21 to 23 are all accommodated in the notch portions 35 to 37 of the light guide plate 32 in this embodiment, only a part of the light-emitting portions 21a to 23a may be contained in the notch portions 35 to 37.

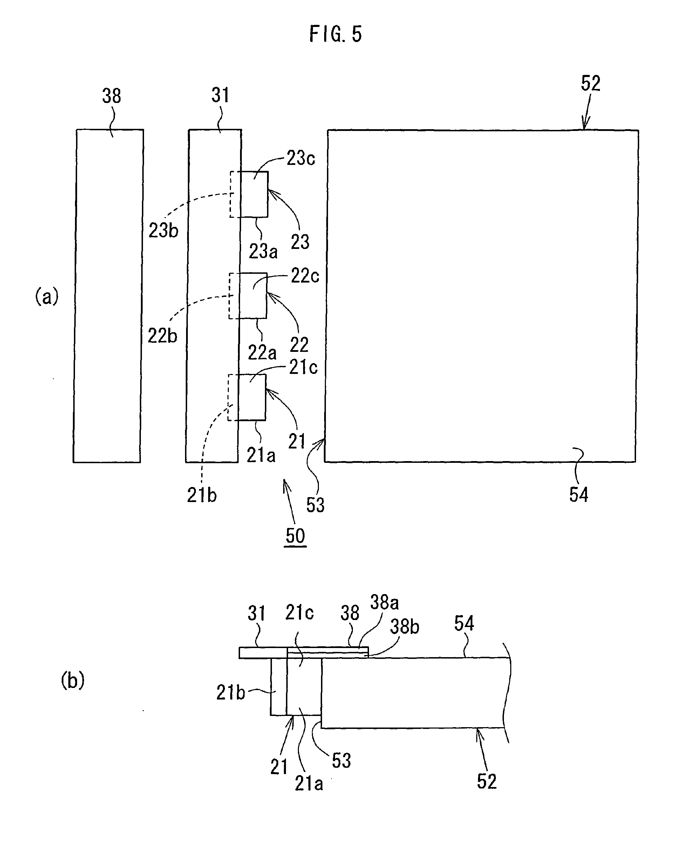

Figs. 5 are diagrams illustrating an essential part of a planar illumination device in a fourth embodiment of the present invention, in which Fig. 5(a) is an exploded plan view and Fig. 5(b) is a side view in an assembled state of Fig. 5(a). A planar illumination device 50 shown in Fig. 5 comprises a plate-state light guide plate 52, three LEDs 21 to 23 arranged on a side end face 53 of the light guide plate 52, the FPC 31 on which the LEDs 21 to 23 are mounted, and the reflector 38, which is the reflecting means in this embodiment.

Components of the planar illumination device 50 in this embodiment are the same as those in the above-mentioned third embodiment, but they are different from the view point that the light guide plate 52 is formed substantially in a rectangular shape not having a notch portion. As shown in Fig. 5(b) with the LED 21 as an example, the LEDs 21 to 23 are arranged so that top faces 21c to 23c of the light-emitting portions 21a to 23a are substantially flush with a major face 54 of the light guide plate 52 and arranged on the side end face 53 by fixing the top faces 21c to 23c of the light-emitting portions 21a to 23a to the major face 54 of the light guide plate 52 by the reflector 38 also functioning as the fixing means.

By the above configuration, a planar illumination device having actions and effects equivalent to those of the planar illumination device 10 in the above first embodiment can be realized with relatively simple configuration and at a lower cost.

Preferred embodiments of the present invention have been described above, but the planar illumination device according to the present invention is not limited to the above-mentioned embodiments, but in the first to fourth embodiments, the light guide plates 2, 52 may have a notch portion similar to the notch portions 75 to 77, 35 to 37 in the light guide plates 72, 32 in the second and third embodiments, for example, or the light guide plates 72, 32 in the second and third embodiments may be used without providing the notch portions 75 to 77, 35 to 37.

Also, in the above-mentioned first and second embodiments, the reflector 25 may have an adhesive layer such as a double-sided adhesive tape affixed to its one face side, for example, similarly to the reflector 38, by which it is fixed to the FPC 11, 31 or the light guide plates 2, 72. At this time, similarly to the reflector 38, areas facing the light-emitting portions 21a to 23a of the LEDs 21 to 23 preferably do not have an adhesive layer but the reflection layer of the reflector 25 is directly opposed to the light-emitting portions 21a to 23a to those areas.

Also, through Figs. 1 to 5, front sides of the light-emitting portions 21a to 23a of the LEDs 21 to 23 (faces opposed to the side end face of the light guide plate) are shown in a flat state, but the LED according to the present invention is not limited to that mode, but the light-emitting portions 21a to 23a may have a projection portion made of a cylindrical face, spherical face or the like. In this case, the outline of the notch portions 75 to 77, 35 to 37 are preferably formed in a profile in conformity with the outline of the projection portion.

Moreover, it is needless to say that the present invention is not limited to the number of LEDs used in the planar illumination device.

## Claims

1. A planar illumination device provided with a plate-state light guide plate, LEDs arranged on a side end face of the light guide plate, and a circuit board on which the LEDs are mounted,
**characterized in that**
the LEDs are made of a translucent resin that seals LED chips and have light-emitting portions not having a sheath but being exposed, mounted on the circuit board with the light-emitting portions projecting from an outline of the circuit board and arranged so that the light-emitting portions are not projected from the side end face of the light guide plate in a direction crossing the light guide plate, and reflecting means covering the light-emitting portions is provided.

2. The planar illumination device according to claim 1, wherein the light guide plate has a notch portion accommodating the light-emitting portion of the LED on the side end face on which the LED of the light guide plate is arranged.

3. The planar illumination device according to claim 1 or claim 2, wherein the light guide plate has a stepped part provided with a step with respect to one of major faces of the light guide plate on the side of the side end face on which the LED of the light guide plate is arranged, the stepped portion accommodates fixing means having an adhesive layer on both faces, and the circuit board is fixed to the light guide plate through the fixing means

4. The planar illumination device according to claim 3, wherein the circuit board is formed in a comb form with a base portion and a plurality of arm portions extending from the base portion, the LED is mounted on the circuit board so that the light-emitting portion is arranged between the pair of arm portions; and
the stepped portion of the light guide plate in which the fixing means is accommodated is provided at a position corresponding to each of the plurality of arm portions.

5. The planar illumination device according to claim 3, wherein the stepped portion of the light guide plate in which the fixing means is accommodated is provided as a projected portion extending from the side end face on which the LED of the light guide plate is arranged the circuit board is a flexible print board.

6. The planar illumination device according to claim 1 or 2, wherein the reflecting means has an adhesive layer at least on one face side, and the back face of the circuit board and one of major faces of the light guide plate are fixed to each other by the reflecting means.

7. The planar illumination device according to claim 1 or 2, wherein the reflecting means has an adhesive layer at least on its one face side, and the light-emitting portion of the LED and one of the major faces of the light guide plate are fixed to each other by the reflecting means.
